# EUROPÄISCHE PATENTSCHRIFT

(11) **EP 0 758 815 B1**
(45) Veröffentlichungstag und Bekanntmachung des Hinweises auf die Patenterteilung: **19.12.2001**
(21) Anmeldenummer: 96202249.7
(22) Anmeldetag: 09.08.1996
(51) Int. Cl.: H02M 3/28, H02M 3/337, H02M 3/335

(54) **Spannungskonverter**
Voltage converter
Convertisseur de tension

(30) Priorität: 16.08.1995 DE 19529941
(43) Veröffentlichungstag der Anmeldung: 19.02.1997
(73) Patentinhaber: Philips Corporate Intellectual Property GmbH, 52064 Aachen (DE); Koninklijke Philips Electronics N.V., 5621 BA Eindhoven (NL)
(72) Erfinder: Raets, Hubert,c/o Philips Patentverwaltung GmbH, 22335 Hamburg (DE)
(74) Vertreter: von Laue, Hanns-Ulrich, Dipl.-Ing.

(56) Entgegenhaltungen:
- WO-A-94/21029
- US-A- 3 596 165
- US-A- 4 484 113
- US-A- 4 586 119
- US-A- 4 604 556

## Beschreibung

Die Erfindung betrifft einen Spannungskonverter zur Konvertierung einer Eingangswechselspannung in eine Gleich-Hochspannung sowie weitere Versorgungs-Gleichspannungen, in welchem die dem Konverter zugeführte Wechselspannung einer Gleichrichteranordnung zugeführt wird, deren Ausgangssignal auf zwei hintereinander geschaltete elektronische Schalter gekoppelt ist, und in welchem diese Gleichspannung in die Gleich-Hochspannung sowie in die Versorgungs-Gleichspannungen konvertiert wird.

Derartige Spannungskonverter, die einerseits eine Hochspannung als Gleichspannung liefern und andererseits zusätzlich meist niedrigere Versorgungs-Gleichspannungen liefern, sind grundsätzlich in zwei Bauweisen bekannt.

Bei einer ersten Bauweise gliedern sich derartige Konverter in zwei Teile. In einem ersten Teil werden die im Gerät benötigten Versorgungsspannungen erzeugt. In einem zweiten, nachgeschalteten Teil, wird aus einer der im ersten Teil erzeugten Spannungen die Gleich-Hochspannung umgesetzt. Derartige Spannungsversorgungen haben vor allem den Nachteil, daß sie zwei Transformatoren benötigen.

Bei einer zweiten Bauart bekannter Spannungskonverter werden Hochspannungstransformatoren verwendet, die auf dem Flyback-Prinzip basieren. Derartige Transformatoren weisen relativ große Abmessungen auf, so daß sie für viele Einsatzgebiete nicht anwendbar sind.

Aus der US 4 604 556 ist eine Schaltungsanordnung zur Erzeugung einer Horizontalablenkung für einen Fernsehempfänger bekannt, welche nach dem Flyback-Prinzip arbeitet und bei der eine primärseitig vorgesehene Spule über eine Kapazität während einer Ladezeit mit Energie versorgt wird. Nach der Ladezeit wird in einer sogenannten "retrace time" die Spule auf eine Kapazität gekoppelt, so daß die Energie zwischen der Kapazität und der Spule in einer Halbschwingung hin und her pendelt.Die Energie dieser Halbschwingung wird für die Horizontalablenkung genutzt. Die Schaltung arbeitet also mit einer sehr niedrigen Resonanzfrequenz, von der unmittelbar eine Halbwelle zur Erzeugung der Ablenkspule genutzt wird. Eine Regelung ist dort insofern vorgesehen, als die Entladezeit, in der Energie über eine Halbwelle hinweg zwischen der Kapazität und der Spule pendelt, auf eine konstante Dauer eingestellt wird. Es wird dann davon ausgegangen, daß damit eine ausgangsseitige Laständerung ausgeregelt ist. Diese Anordnung benötigt zum einen sehr große Spulen und Kapazitäten, da diese als Energiespeicher eingesetzt werden. Andererseits ist dort nicht unmittelbar eine Regelung der Ausgangsspannung vorgesehen.

Aufgabe der Erfindung ist es, einen Spannungskonverter der eingangs genannten Art anzugeben, der kleiner und einfacher im Aufbau als die bekannten Bauarten ist.

Diese Aufgabe wird dadurch gelöst, daß parallel zu einem der elektronischen Schalter eine Reihenschaltung aus einer Kapazität, eine Induktivität und einer Primärwicklung eines Transformators geschaltet ist, daß die Schaltung mit einer Frequenz oberhalb der Resonanzfrequenz des durch die primärseitige Kapazität, die primärseitige Induktivität und zur Primärseite transformierte sekundärseitige Kapazitäten gebildeten Schwingkreises betrieben wird, daß eine Sekundärwicklung des Transformators eine ausgangsseitige Kapazität nachgeschaltet ist, daß eine Steuerschaltung vorgesehen ist, die die Schaltfrequenz der elektronischen Schalter so steuert, daß über der ausgangsseitigen Kapazität eine Gleichspannung gewünschter Höhe abfällt und daß an dem Transformator zusätzliche sekundärseitige Anzapfungen vorgesehen sind, denen Schaltungen nachgeschaltet sind, die die Versorgungs-Gleichspannung liefern.

Der Gleichspannungskonverter weist eine Halbbrücke auf, so daß zu einem der geschalteten elektronischen Schalter eine Reihenschaltung aus einer Kapazität, einer Induktivität und der Primärwicklung des Transformators parallelgeschaltet ist. Der Sekundärwicklung des Transformators ist eine Kapazität parallelgeschaltet. Die primärseitige Kapazität, die primärseitige Induktivität und auf die Primärseite transformierte sekundärseitige Kapazitäten bilden den Serien-Parallel-Schwingkreis. Dabei sind die primärseitigen Elemente Kapazität und Induktivität meist direkt aufgebaut, wohingegen die sekundärseitige Kapazität durch die ausgangsseitige Kapazität oder, wenigstens teilweise, durch die Eingangskapazität einer dieser vorgeschalteten Hochspannungskaskade, die gemäß einer weiteren Ausgestaltung der Erfindung vorgesehen sein kann, gebildet sein kann. Ebenso kann die Kapazität teilweise auch durch die Sekundärwicklung des Transformators gebildet sein.

Es ist eine Steuerschaltung vorgesehen, welche die Schaltfrequenz der elektronischen Schalter so steuert, daß die ausgangsseitige Kapazität unabhängig von der Last, die die Schaltung zu versorgen hat, immer auf einen gewünschten Hoch-Gleichspannungswert aufgeladen wird.

Die beiden eingangsseitig elektronisch gesteuerten Schalter werden durch ein Rechtecksignal mit hoher Frequenz im Gegentakt angesteuert. Der Serien-Parallel-Schwingkreis treibt einen nahezu sinusförmigen Strom durch die Primärwicklung des Transformators. Sekundärseitig wird wenigstens ein Teil dieses Stromes für das Umladen der sekundärseitigen Kapazität verwendet.

Durch einen Betrieb oberhalb der Resonanzfrequenz des Serien-Parallel-Schwingkreises gibt es keine Einschaltverluste der elektronischen Schalter und der ihnen gegebenenfalls parallelgeschalteten Dioden. Die Ausschaltverluste können gegebenenfalls durch parallel zu den Schaltern angeordnete Kondensatoren weiter reduziert werden. Im Ergebnis verursachen die Schalter praktisch nur rein ohmsche Schalterverluste.

An dem Transformator sind zusätzliche sekundärseitige Anzapfungen vorgesehen, denen die zusätzlichen Versorgungs-Gleichspannungen entnehmbar sind.

Durch diesen Aufbau genügt ein Transformator, um einerseits die Gleich-Hochspannung und andererseits die Versorgungs-Gleichspannungen zu generieren. Der Transformator weist relativ kleine Abmessungen auf, da er, im Gegensatz zu den Anordnungen nach dem Stande der Technik, mit einer hohen Frequenz beidseitig ausgesteuert wird. Gleichzeitig wird mittels dieses Transformators eine meist gewünschte Netztrennung der Gleich-Hochspannung und der Versorgungs-Gleichspannungen von dem Eingangsnetzsignal erreicht.

Ein weiterer Vorteil der Schaltung besteht darin, daß diese in der Lage ist, im Leerlauf zu arbeiten, also ohne nennenswerte externe Last. Hierzu ist der erfindungsgemäße Konverter mit dem Serien-Parallel-Schwingkreis ohne Ausgangsdrossel besonders gut geeignet.

Der Spannungskonverter kann mit hohem Wirkungsgrad in einem Bereich von Vollast bis Leerlauf mit stabiler Ausgangsspannung arbeiten.

Wird dem Transformator, wie dies gemäß einer Ausgestaltung der Erfindung vorgesehen ist, eine Hochspannungskaskade zur Spannungsmultiplikation nachgeschaltet, so ist es möglich, die Spannungsanforderungen an den Transformator deutlich zu reduzieren.

Gemäß einer weiteren Ausgestaltung der Erfindung ist vorgesehen, daß die zusätzlichen sekundärseitigen Anzapfungen als zusätzliche Anzapfungen der Sekundärwicklung des Transformators ausgebildet sind. Es ist dann also insgesamt nur eine sekundärseitige Wicklung vorgesehen, der an verschiedenen Anzapfungen einerseits die hohe Gleichspannung, mittels der die sekundärseitig vorgesehene Kapazität aufgeladen wird, wie auch die Versorgungs-Gleichspannungen entnommen werden. Es sind für diese verschiedenen Spannungen jeweils Anzapfungen der einen Sekundärwicklung vorgesehen.

Alternativ hierzu kann gemäß einer weiteren Ausgestaltung der Erfindung vorgesehen sein, daß die zusätzlichen sekundärseitigen Anzapfungen jeweils einer eigenen Sekundärwicklung des Transformators entnommen werden. In diesem Falle weist der Transformator mehrere sekundärseitige Wicklungen auf, entsprechend der Anzahl der gewünschten Versorgungs-Gleichspannungen plus der Hoch-Gleichspannung.

Gemäß einer weiteren Ausgestaltung der Erfindung ist vorgesehen, daß die den zusätzlichen sekundärseitigen Anzapfungen entnommenen Versorgungs-Gleichspannungen Schaltungsanordnungen zur Spannungsstabilisierung zugeführt werden. Die an sich schon durch die Steuerschaltung geregelte Anordnung liefert schon relativ stabile Versorgungsspannungen. Um diese noch weiter zu stabilisieren, können die dem Transformator sekundärseitig entnommenen Versorgungs-Gleichspannungen weiter stabilisiert werden.

Gemäß einer weiteren Ausgestaltung der Erfindung ist vorgesehen, daß in der Steuerschaltung ein Optokoppler vorgesehen ist, der der Netztrennung dient. Für die Hoch-Gleichspannung und die Versorgungs-Gleichspannungen wird die Netztrennung durch den Transformator erzielt. Da jedoch die Steuerschaltung die Hoch-Gleichspannung messen muß und andererseits die elektronischen Schalter, die dem Transformator bzw. dem Serien-Parallel-Schwingkreis vorgeschaltet sind, steuern muß, ist hier eine weitere Netztrennung erforderlich. Diese kann vorteilhaft mttels eines Optokopplers vorgenommen werden.

Aufgrund der oben beschriebenen Eigenschaften, insbesondere des guten Wirkungsgrades und der Fähigkeit der Schaltung im gesamten Aussteuerungsbereich zwischen Leerlauf und Vollast immer die gewünschte Hoch-Gleichspannung und zusätzliche Versorgungs-Gleichspannungen zur Verfügung zu stellen, ist diese vorteilhaft für den Einsatz in Bildwiedergabegeräten zur Ansteuerung einer Bildwiedergaberöhre sowie zur Erzeugung weiterer benötigter Versorgungs-Gleichspannungen geeignet.

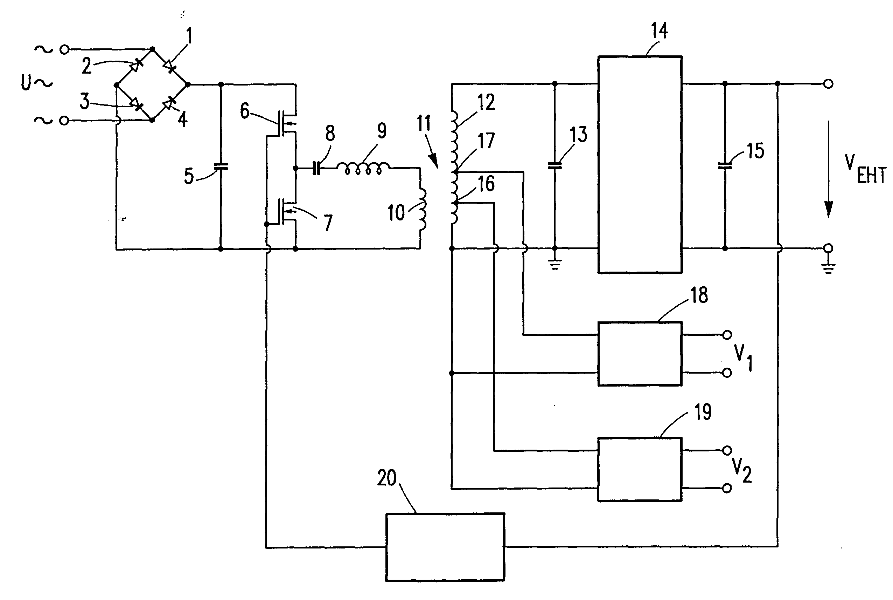

Nachfolgend wird anhand der Zeichnung ein Ausführungsbeispiel der Erfindung näher erläutert.

Die einzige Figur der Zeichnung zeigt einen erfindungsgemäßen Spannungskonverter, dem eingangsseitig eine Wechselspannung zugeführt wird, die in der Figur mit U ∼ gekennzeichnet ist. Mittels des in der Figur dargestellten Spannungskonverters soll diese Wechselspannung einerseits in eine hohe Gleichspannung konvertiert werden, die in der Figur mit V_{EHT} gekennzeichnet ist. Außerdem soll der Spannungskonverter beispielsweise zwei Versorgungs-Gleichspannungen verschiedener Größe zur Verfügung stellen, die in der Figur mit V₁ und V₂ bezeichnet sind.

Selbstverständlich können auch noch mehr Versorgungs-Gleichspannungen generiert werden.

Der Spannungskonverter weist eingangs eine Gleichrichteranordnung auf, welche aus vier Dioden 1,2,3 und 4 in Form einer an sich bekannten Gleichrichterbrücke aufgebaut ist. Der Gleichrichteranordnung ist zur Stabilisierung von deren Ausgangsspannung eine Kapazität 5 nachgeschaltet. Zwischen die Gleichrichterbrücke und die Kapazität 5 kann ein in der Figur nicht dargestellter sogenannter Preconditioner geschaltet sein, der die Harmonischen Oberwellen des aufgenommenen Netzstromes reduziert. Parallel zu der Kapazität 5 ist die Reihenschaltung zweier elektronischer Schalter 6 bzw. 7 vorgesehen.

Bei den elektronischen Schaltern 6 und 7 kann es sich beispielsweise um MOSFET-Transistoren handeln, die gegebenenfalls mit Antiparalleldioden versehen sein können.

Der Spannungskonverter ist eingangsseitig in Form einer sogenannten Halbbrücke aufgebaut, d.h. parallel zu einem der beiden Schalter 6,7, in dem Ausführungsbeispiel gemäß der Figur parallel zu dem Schalter 7, ist eine Serienschaltung aus einer Kapazität 8, einer Induktivität 9 und einer Primärwicklung 10 eines Transformators 11 vorgesehen.

Der Transformator 11 weist ausgangsseitig eine Sekundärwicklung 12 auf, zu der eine Kapazität 13 parallelgeschaltet ist.

Die primärseitig vorgesehene Kapazität 8 und die Induktivität 9 bilden zusammen mit der sekundärseitig vorgesehenen Kapazität 13 den Serien-Parallel-Schwingkreis.

Der Kapazität 13 kann sekundärseitig eine Hochspannungs-Multiplikatorschaltung, die in der Figur mit 14 gekennzeichnet ist und bei der es sich beispielsweise um eine Hochspannungskaskade handeln kann, nachgeschaltet sein. Dieser Hochspannungs-Multiplikatorschaltung 14 ist wiederum eine ausgangsseitige Kapazität 15 nachgeschaltet. Bei Ausführungsformen, bei denen keine Hochspannungs-Multiplikatorschaltung vorgesehen ist, kann die Kapazität 13 entfallen.

Die sekundärseitige Wicklung 12 des Transformators 11 weist neben den Endanzapfungen, denen die Kapazität 13 nachgeschaltet ist, weitere Teilanzapfungen 16 bzw. 17 auf. Diesen Anzapfungen können geringere Spannungen entnommen werden. In dem Ausführungsbeispiel gemäß der Figur wird eine erste Versorgungs-Gleichspannung der Anzapfung 17 der Sekundärwicklung 12 des Transformators 11 entnommen und einer in der Figur nicht näher dargestellten Schaltungsanordnung 18 zur Spannungsstabilisierung zugeführt. Diese Schaltungsanordnung 18 liefert ausgangsseitig eine erste Versorgungs-Gleichspannung V₁.

In dem Ausführungsbeispiel gemäß der Figur weist die Sekundärwicklung 12 des Transformators 11 ferner eine weitere sekundärseitige Anzapfung 16 auf, der eine etwas geringere Spannung als der Anzapfung 17 entnommen werden kann. Diese Anzapfung 16 ist mit einer weiteren Schaltungsanordnung zur Spannungsstabilisierung 19 gekoppelt, der ausgangsseitig eine weitere Versorgungs-Gleichspannung V₂ entnehmbar ist.

Der Spannungskonverter weist ferner eine Steuerspannung 20 auf, welche die Spannung über der ausgangsseitigen Kapazität 15 abgreift und die elektronischen Schalter 7 und 8 so steuert, daß die über der Kapazität 15 abfallende Gleichspannung immer den gewünschten Wert aufweist. Dies hat in entsprechender Weise auch zur Folge, daß die den Anzapfungen 16 bzw. 17 entnommenen Versorgungs-Gleichspannungen, die in nochmals stabilisierter Form als Versorgungs-Gleichspannung V₁ bzw. V₂ zur Verfügung gestellt werden, ebenfalls bezüglich ihrer Spannungshöhe geregelt sind.

Die primärseitig vorgesehene Kapazität 8 und die Induktivität 9 sind meist als diskrete Bauelemente aufgebaut, wohingegen die Kapazität 13 teilweise durch die Kapazität der Sekundärwicklung 12 des Transformators 11 gebildet wird. Die Kapazität 8 und die Induktivität 9 sowie der über den Transformator 11 zur Primärseite transformierte Kapazitätswert der Kapazität 13 bilden einen Serien-Parallel-Schwingkreis, welcher eine Resonanzfrequenz aufweist. Diese Resonanzfrequenz ändert sich mit der Belastung der Schaltung. Die Schaltung wird erfindungsgemäss mit einer Arbeitsfrequenz betrieben, welche oberhalb der Resonanzfrequenz des Serien-Parallel-Schwingkreises liegt.

Ist dies der Fall, so bedeutet eine höhere Taktfrequenz der elektronischen Schalter 6,7, die durch die Steuerschaltung 20 in entsprechender Weise angesteuert werden, eine geringere und eine sich der Resonanzfrequenz nähernde, niedrigere Schaltfrequenz der elektronischen Schalter 7 und 8 eine höhere Ausgangsspannung. Diese Eigenschaft kann dazu benutzt werden, den über der Kapazität 15 abfallenden Spannungswert auf einem gewünschten Wert zu halten. Dies ist Aufgabe der Steuerschaltung 20, welche den über der Kapazität 15 abfallenden Spannungswert abtastet und die Schaltfrequenz der elektronischen Schalter 6 und 7 so steuert, daß der gewünschte Spannungswert jederzeit erhalten bleibt.

Für die oben beschriebene Konstellation, bei der die Schaltfrequenz der elektronischen Schalter 6 bzw. 7 über der Resonanzfrequenz des Serien-Parallel-Schwingkreises liegt, bedeutet dies, daß bei einem zu geringen Spannungswert über der Kapazität 15 die Schaltfrequenz der elektronischen Schalter 6 und 7 abgesenkt wird. Im umgekehrten Falle wird diese Schaltfrequenz heraufgesetzt. Damit ist es möglich, die Schaltung sowohl unter voller Last wie auch im Leerlauf zu betreiben, wobei die Ausgangsspannung jederzeit konstant bleibt.

Dies macht die erfindungsgemäße Schaltung insbesondere zur Ansteuerung einer Bildwiedergaberöhre geeignet, bei der unabhängig von der Last, also vom Bild inhalt, jederzeit eine konstante Gleichspannung zur Verfügung gestellt werden kann.

Ferner liefert die Schaltungsanordnung weitere, in dem gleichen Gerät gegebenenfalls benötigte Versorgungs-Gleichspannungen V₁ bzw. V₂.

Die Schaltung weist einen relativ einfachen Aufbau mit nur einem Transformator auf, der gleichzeitig die Netztrennung für die benötigten Spannungen gewährleistet.

Der Transformator wird bezüglich seines magnetischen Materials zu beiden Polaritäten hin voll ausgesteuert, so daß er relativ klein ausgelegt sein kann.

In dem Ausführungsbeispiel gemäß der Figur ist eine Hochspannungs-Multiplikatorschaltung 14 vorgesehen. In diesem Falle bildet die Kapazität 13, die der Multiplikatorschaltung 14 vorgeschaltet ist, transformiert auf die Primärseite, ein Element des Serien-Parallel-Schwingkreises. Die von der Schaltungsanordnung ausgangsseitig zur Verfügung gestellte Spannung fällt über der der Multiplikatorschaltung 14 nachgeschalteten Kapazität 15 ab. Weist die Schaltungsanordnung keine Multiplikatorschaltung 14 auf, so kann nur eine Kapazität vorgesehen sein, die, transformiert auf die Primärseite, Element des Serien-Parallel-Schwingkreises ist und die gleichzeitig diejenige Ausgangskapazität darstellt, über der die gewünschte Hoch-Gleichspannung abfällt.

## Patentansprüche

1. Spannungskonverter zur Konvertierung einer Eingangswchselspannung in eine Gleich-Hochspannung (V_{EHT}) sowie weitere Versorgungs-Gleichspannungen (V₁,V₂), in welchem die dem Konverter zugeführte Wechselspannung einer Gleichrichteranordnung (1,2,3,4) zugeführt wird, deren Ausgangssignal auf zwei hintereinander geschaltete elektronische Schalter (6,7) gekoppelt ist, in welchem diese Gleichspannung in die Gleich-Hochspannung sowie in die Versorgungs-Gleichspannungen konvertiert wird, in welchem parallel zu einem der elektronischen Schalter (6,7) eine Reihenschaltung aus einer Kapazität (8), einer Induktivität (9) und einer Primärwicklung (10) eines Transformators (11) geschaltet ist, und in welchem einer Sekundärwicklung (12) des Transformators (11) eine ausgangsseitige Kapazität (15) nachgeschaltet ist, **dadurch gekennzeichnet, daß** die Schaltung mit einer Frequenz oberhalb der Resonanzfrequenz des durch die primärseitige Kapazität (8), die primärseitige Induktivität (9) und zur Primärseite transformierte sekundärseitige Kapazitäten (13, 15) gebildeten Schwingkreises betrieben wird, daß eine Steuerschaltung (20) vorgesehen ist, die die Schaltfrequenz der elektronischen Schalter (6,7) so steuert, daß über der ausgangsseitigen Kapazität (15) eine Gleichspannung gewünschter Höhe abfällt und daß an dem Transformator (11) zusätzliche sekundärseitige Anzapfungen (16,17) vorgesehen sind, denen Schaltungen (18,19) nachgeschaltet sind, die die Versorgungs-Gleichspannungen liefern.

2. Spannungskonverter nach Anspruch 1, **dadurch gekennzeichnet, daß** der ausgangsseitigen Kapazität (15) eine Hochspannungs-Multiplikatorschaltung (14) vorgeschaltet ist.

3. Spannungskonverter nach Anspruch 1 oder 2, **dadurch gekennzeichnet, daß** die zusätzlichen sekundärseitigen Anzapfungen (16,17) als zusätzliche Anzapfungen der Sekundärwicklung (12) des Transformators (11) ausgebildet sind.

4. Spannungskonverter nach einem der Ansprüche 1 bis 3, **dadurch gekennzeichnet, daß** die zusätzlichen sekundärseitigen Anzapfungen (16,17) jeweils mit einer eigenen, getrennten Sekundärwicklung des Transformators (11) verbunden sind.

5. Spannungskonverter nach einem der Ansprüche 1 bis 4, **dadurch gekennzeichnet, daß** die den zusätzlichen sekundärseitigen Anzapfungen (16,17) entnommenen Versorgungs-Gleichspannungen Schaltungsanordnungen (18,19) zur Spannungsstabilisierung zugeführt werden.

6. Spannungskonverter nach einem der Ansprüche 1 bis 5, **dadurch gekennzeichnet, daß** in der Steuerschaltung (20) ein Optokoppler vorgesehen ist, der der Netztrennung dient.

7. Spannungskonverter nach einem der Ansprüche 1 bis 6, **dadurch gekennzeichnet, daß** der Gleichrichteranordnung eine Schaltungsanordnung nachgeschaltet ist, welche die Harmonischen Oberwellen der Wechselspannung reduziert.

8. Verwendung des Spannungskonverters nach einem der Ansprüche 1 bis 7 in einem Bildwiedergabegerät zur Ansteuerung einer Bildwiedergaberöhre sowie zur Erzeugung weiterer Versorgungs-Gleichspannungen.

## Claims

1. A voltage converter for converting an AC input voltage into a DC high voltage (V_{EHT}) further DC power supply voltages (V₁, V₂) in which the AC voltage applied to the converter is applied to a rectifier arrangement (1, 2, 3, 4) whose output signal is coupled to two consecutively switched electronic switches (6, 7), in which this DC voltage is converted into the DC high voltage and into the DC power supply voltages, in which a series arrangement of a capacitance (8), an inductance (9) and a primary winding (10) of a transformer (11) is arranged in parallel with one of the electronic switches (6, 7), and in which a secondary winding (12) of the transformer (11) precedes a capacitance (15) at the output end, **characterized in that** the circuit is controlled at a frequency above the resonance frequency of the resonant circuit constituted by the capacitance (8) at the primary end, the inductance (9) at the primary end and the capacitances (13,15) at the secondary end transformed to the primary end, **in that** a control circuit (20) is provided which controls the switching frequency of the electronic switches (6, 7) in such a way that a DC voltage of the desired value decreases across the capacitance (15) at the output end, and **in that** the transformer (11) is provided with additional taps (16, 17) at the secondary end, which are followed by circuits (18,19) supplying the DC power supply voltage.

2. A voltage converter as claimed in claim 1, **characterized in that** a high voltage multiplier circuit (14) precedes the capacitance (15) at the output end.

3. A voltage converter as claimed in claim 1 or 2, **characterized in that** the additional taps (16, 17) at the secondary end are constituted as additional taps of the secondary winding (12) of the transformer (11).

4. A voltage converter as claimed in any one of claims 1 to 3, **characterized in that** the additional taps (16, 17) at the secondary end are each connected to an associated, separate secondary winding of the transformer (11).

5. A voltage converter as claimed in any one of claims 1 to 4, **characterized in that** the DC power supply voltages derived from the additional taps (16, 17) at the secondary end are applied to voltage-stabilizing circuit arrangements (18, 19).

6. A voltage converter as claimed in any one of claims 1 to 5, **characterized in that** the control circuit (20) includes an optocoupler which is used for mains separation.

7. A voltage converter as claimed in any one of claims 1 to 6, **characterized in that** the rectifier arrangement precedes a circuit arrangement which reduces the higher harmonics of the AC voltage.

8. Use of the voltage converter as claimed in any one of claims 1 to 7 in a picture display device for controlling a picture display tube and for generating further DC power supply voltages.

## Revendications

1. Convertisseur de tension pour la conversion d'une tension alternative d'entrée en une haute tension continue (V_{EHT}) et en d'autres tensions continues d'alimentation (V₁, V₂), dans lequel la tension alternative amenée au convertisseur est amenée à un dispositif redresseur dont le signal de sortie est couplé sur deux commutateurs électroniques montés successivement et dans lequel cette tension continue est convertie en une haute tension continue et en tensions continues d'alimentation, dans lequel, parallèlement à l'un des commutateurs électroniques (6, 7), il est prévu un montage en série d'une capacité (8), d'une inductance (9) et d'un enroulement primaire (10) d'un transformateur (11) et dans lequel une capacité (15) côté sortie est montée en aval d'un enroulement secondaire (12) du transformateur (11), **caractérisé en ce que** le circuit fonctionne à une fréquence supérieure à la fréquence de résonance du circuit oscillant formé par la capacité (8) côté primaire, l'inductance (9) côté primaire et les capacités (13,15) côté secondaire transformées vers le côté primaire, qu'il est prévu un circuit de commande qui commande la fréquence de commutation des commutateurs électroniques (6, 7) de telle sorte qu'une tension continue de voltage souhaité retombe sur la capacité (15) côté sortie et qu'il est prévu sur le transformateur (11) des prises de réglage (16, 17) supplémentaires côté secondaire en aval desquelles sont montés les circuits (18,19) qui délivrent les tensions continues d'alimentation.

2. Convertisseur de tension selon la revendication 1, **caractérisé en ce**
**qu'**en amont de la capacité (15) côté sortie est monté un circuit multiplicateur à haute tension (14).

3. Convertisseur de tension selon l'une des revendications 1 ou 2, **caractérisé en ce**
**que** les prises de réglage (16, 17) supplémentaires côté secondaire sont conçues comme des prises de réglage supplémentaires de l'enroulement secondaire (12) du transformateur (11).

4. Convertisseur de tension selon l'une des revendications 1 à 3, **caractérisé en ce**
**que** les prises de réglage (16, 1) supplémentaires côté secondaire sont respectivement reliées à leur propre enroulement secondaire séparé du transformateur (11).

5. Convertisseur de tension selon l'une des revendications 1 à 4, **caractérisé en ce**
**que** les tensions continues d'alimentation prélevées aux prises de réglage (16, 17) supplémentaires côté secondaire sont amenées aux circuits (18, 19) pour la stabilisation de la tension.

6. Convertisseur de tension selon l'une des revendications 1 à 5, **caractérisé en ce que** le circuit de commande (20) comporte un optocoupleur qui sert à la séparation de réseau.

7. Convertisseur de tension selon l'une des revendications 1 à 6, **caractérisé en ce**
**qu'**en aval du dispositif redresseur est monté un circuit qui réduit les ondes harmoniques de la tension alternative.

8. Mise en oeuvre du convertisseur de tension selon l'une des revendications 1 à 7 dans un appareil de reproduction d'images pour l'amorçage d'un tube de reproduction d'images ainsi que pour la production de tensions continues d'alimentation supplémentaires.
